**Europäisches Patentamt**

(19) **European Patent Office**

**Office européen des brevets**

(11) Numéro de publication: **0 098 219**
**B1**

(12) # FASCICULE DE BREVET EUROPEEN

(45) Date de publication du fascicule du brevet:
**11.09.85**

(51) Int. Cl.⁴: **B 28 C 7/04**, G 01 F 3/26

(21) Numéro de dépôt: **83401312.0**

(22) Date de dépôt: **24.06.83**

(54) **Dispositif doseur-verseur.**

(30) Priorité: **29.06.82 FR 8211372**

(43) Date de publication de la demande:
**11.01.84 Bulletin 84/2**

(45) Mention de la délivrance du brevet:
**11.09.85 Bulletin 85/37**

(84) Etats contractants désignés:
**BE DE FR GB IT LU NL**

(56) Documents cités:
**DE - C - 226 259**
**FR - A - 1 052 740**
**US - A - 3 395 837**

(73) Titulaire: **ROUSSEL-UCLAF, 35, boulevard des Invalides,**
**F-75007 Paris (FR)**

(72) Inventeur: **Pascual, Henri, Garcin Lamontjoie,**
**F-47310 Laplume (FR)**

(74) Mandataire: **Fritel, Hubert et al,**
**ROUSSEL-UCLAF 111, route de Noisy Boîte Postale**
**no. 9, F-93230 Romainville (FR)**

BUNDESDRUCKEREI BERLIN

## Description

La présente invention a pour objet un dispositif doseur-verseur. Plus particulièrement, elle a pour objet un dispositif destiné à doser et à verser des quantités voulues de matériaux.

Le dispositif de la présente invention peut être favorablement utilisé par exemple, lors du dosage et du versement de matériaux pulvérulents nécessaires pour la préparation de mélanges poudreux, de suspensions ou de solutions de matériaux pulvérulents dans des véhicules liquides ou solides ou dans des solvants.

Le dispositif de l'invention trouve son utilisation par exemple, dans la préparation de bouillies, de suspensions ou solutions nécessaires en agriculture.

L'avantage essentiel du dispositif de l'invention réside dans le fait que, grâce à sa structure et à l'agencement de ses éléments, il assure que la quantité du matériau voulue et dosée est rapidement et totalement déversée, sans qu'une certaine partie dudit matériau adhère aux parois du dispositif.

En effet, dans de nombreux appareils utilisés pour doser et déverser des matériaux pulvérulents, employés habituellement pour préparer les mélanges nécessaires à agriculture, il arrive qu'une certaine quantité de matériaux ne soit pas déversée et reste dans l'appareil.

Cela est dû:

a) à la nature de ces matériaux, dont les particules ont souvent tendance à s'agglomérer et à adhérer aux parois,
b) à la construction des dispositifs eux-mêmes et aux dessins de leurs éléments. Ces derniers peuvent présenter des recoins ou des angles dans lesquels les particules du matériau dosé se déposent et restent après l'opération de versement.

Le dispositif de la présente invention se propose d'éliminer ces inconvénients, grâce à sa structure, à l'agencement de ses éléments et à son fonctionnement. Lors du versement du matériau dosé, le dispositif ne présentant ni recoins, ni angles des parois pouvant faciliter la retenue des particules, l'ensemble des matériaux dosés est entièrement déversé et les dosages voulus peuvent s'effectuer avec l'exactitude désirée dans le temps exigé et sans inconvénients.

La plupart des appareils proposés actuellement, font appel comme unique moyen de dosage à une vis d'Archimède.

Ces appareils sont donc basés sur le dosage volumétrique.

Vu ces appareils et ce type de dosage, il faut prendre en considération le fait que pour ces appareils, la densité apparente du matériau à doser joue un rôle important.

Bien que dans les matériaux à granulométrie constante et de l'ordre du millimètre, la densité puisse être plus ou moins constante, il n'en est pas de même pour des matériaux à granulométrie plus fine. Ainsi pour les microgranulés, des variations de densité de 15% sont considérées comme acceptables.

Pour les produits poudreux (ou micronisés), des variations de densité de 25% sont courantes.

Ces variations sont fortement influencées par le degré de tassement des matériaux en question et par leur granulométrie qui peut varier plus ou moins.

Du fait de ces variations de densité des matériaux et du type d'appareils couramment utilisés, basés sur le dosage volumétrique, le dosage de ces matériaux peut présenter des inconvénients non négligeables, car, en fonction des paramètres indiqués ci-dessus, les quantités dosées des matériaux peuvent varier d'un lot à l'autre.

Le dispositif de l'invention, basé par contre sur le dosage pondéral donc indépendant des paramètres précités (tels que les variations de densité et de granulométrie des matériaux à doser), permet, grâce à sa conception, à sa construction et à l'agencement de ses éléments, un dosage aisé, constant, reproductible et donc satisfaisant.

On connait également des appareils comme, par exemple, ceux utilisés lors du dosage du ciment, basés sur le dosage pondéral et le basculement de différents types de récipients de formes diverses (p.e. FR-A-1 052 740).

Néanmoins ces appareils, destinés aux chantiers de construction et à la préparation du béton, n'exigent pas une exactitude de dosage très poussée.

Par conséquent, ils sont conçus et construits de manière à satisfaire les normes d'exactitude de dosage admises dans cette activité, où des variations plus ou moins prononcées, par exemple du poids du ciment peuvent être tolérées.

Par contre, le dispositif, objet de la présente invention, permet un dosage où les variations du poids du matériau dosé sont réduites au minimum.

En se référant aux dessins annexés, le dispositif, objet de la présente invention, comportant un bâti (8) et un godet (1),

— le godet (1) étant constitué par deux compartiments (2) et (3) situés de part et d'autre du plan de symétrie A-B du godet (1), adossés ou pouvant faire corps ensemble,
— ledit godet (1) étant mobile et susceptible d'effectuer des basculements dans un mouvement oscillatoire autour d'un axe (6) passant par le plan de symétrie A-B du godet (1), l'axe (6) étant horizontal et agencé de manière à être logé sur les sièges (7) du bâti (8),
— ce godet (1) étant, en outre, doté:
— d'un moyen (9) susceptible de contrôler l'amplitude de ses oscillations de part et d'autre de la verticale,
— d'un moyen (10) permettant de régler et de contrôler son couple de basculement,

— et d'un moyen (11) assurant que le couple de basculement du godet (1) est indentique autour de l'axe (6) et de part et d'autre de la verticale,

est caractérisé en ce que:

— les compartiments 2 et 3 du godet (1) comportent des côtés latéraux qui sont constitués respectivement par des cloisons mobiles (4) et (4') et (5) et (5');

— le moyen (9) susceptible de contrôler l'amplitude des oscillations du godet (1) est constitué par une butée (19) placée au sommet (16) du godet (1) et dans le plan de symétrie A-B, butée (19) qui coopère d'une part avec une glissière (20) pouvant être solidaire du bâti (8), dotée des arrêtoirs (21) et (22) délimitant la course de la butée (19);

— le moyen (10) permettant de régler et de contrôler le couple de basculement du godet (1) est consitué par une masse (23) réglable disposée au niveau de la partie supérieure du godet (1);

— le moyen (11) assurant que le couple de basculement du godet (1) est identique autour de l'axe (6) et de part et d'autre de la verticale, est constitué par une masse (24) réglable, disposée au niveau de la partie inférieure du godet (1).

Le dispositif de la présente invention peut encore être caractérisé en ce que:

— le plan de symétrie A-B du godet (1), quand celui-ci est en position dite de repos (prêt pour l'utilisation), fait avec la verticale un angle d'environ 45°;

— les fonds des compartiments (2) et (3) forment dans leurs parties dites supérieures (12) et (12') un angle d'environ 20°, avec le plan de symétrie A-B, et dans leurs parties dites inférieures (13) et (13') un angle d'environ 45°;

— les extrêmités dites inférieures (32) et (32') et (33) et (33') des cloisons mobiles (4) et (4') d'une part, (5) et (5') d'autre part, constituant les côtés latéraux des compartiments (2) et (3) respectivement, sont rendues solidaires entre elles par paire, par des parties transversales (30) et (31) respectivement;

— les extrêmités dites supérieures (14) et (14') et (15) et (15') des cloisons mobiles (4) et (4') d'une part et (5) et (5') d'autre part, constituant les côtés latéraux des compartiments (2) et (3) respectivement, sont attachées symétriquement et d'une manière permettant leur mobilité autour des points d'attache (17) et (17') et (18) et (18') respectivement;

— le moyen (9) susceptible de contrôler l'amplitude des oscilations du godet (1) peut effectuer simultanément, l'enregistrement du nombre des basculements oscillatoires et le contrôle de l'alimentation du godet (1) en matériau à doser, du fait qu'il coopère respectivement avec un dispositif compteur des basculements oscillatoires et avec au moins un dispositif commandant l'alimentation du godet (1) en matériau à doser.

L'invention a encore pour objet un appareil pour doser et préparer les mélanges des matériaux, caractérisé en ce qu'il comporte incorporé, le dispositif, objet plus particulier de la présente invention et décrit précédemment.

L'invention a enfin pour objet un procédé de dosage et de versement de quantités déterminées de matériaux au moyen du dispositif défini ci-dessus.

Le dispositif de l'invention peut encore être illustré par les modes d'exécution suivants:

— on choisit favorablement que les compartiments (2) et (3) soient symétriques,

— le bâti (8) dans lequel est disposé le godet (1) peut faire partie d'un dispositif complexe, connu en soi, pour la préparation de mélanges;

— le sommet (16) du godet (1) a la forme d'un toit dont les deux versants font un angle d'environ 45° avec le plan A-B;

— les jonctions (25) et (25') des parties dites supérieures (12) et (12') et des parties dites inférieures (13) et (13') des compartiments (2) et (3) constituant le fond sont arronaies;

— l'attachement des cloisons mobiles (4) et (4') et (5) et (5') au sommet (16) du godet (1) aux points d'attache (17) et (17') et (18) et (18') respectivement est effectué au moyen d'articulations à couteau (26) et (26'); ces cloisons mobiles sont, en outre, comme déjà dit, rendues solidaires respectivement entre elles par paire, des parties transversales (30) et (31) qui font éviter au cours du remplissage d'un compartiment que le versement du matériau à doser ne fasse pas écarter lesdites cloisons d'une part et d'autre part, que le matériau dosé ne puisse pas glisser hors du godet avant son basculement normal et ne fausse ainsi la mesure;

— les cloisons mobiles (4) et (4') et (5) et (5') constituant les côtés latéraux des compartiments (2) et (3) respectivement sont découpées de manière à correspondre au profil des fonds des compartiments (2) et (3) afin de pouvoir délimiter et bien clôturer les compartiments quand chacun de ces compartiments se trouve en position dite de repos;

— la butée (19) dont le rôle est de coopérer aussi avec un dispositif compteur des basculements oscillatoires du godet (1) actionne par l'intermédiaire d'un contact électrique (27), un appareil commandant l'alimentation (28) du godet (1) en matériau à doser;

— ce contact électrique (27) peut aussi être remplacé par un dispositif détecteur de passage magnétique, (ce qui supprime les frottements), relié à un compteur-décompteur;

- chaque impulsion électrique ainsi produite est enregistrée sur ledit compteur-décompteur dont la remise en chiffres est automatique;
- ce compteur-décompteur est réglé au préalable sur un nombre de basculements oscillatoires du godet (1) déterminé en fonction de la quantité du matériau à doser; quand le nombre d'oscillations, donc de basculements, affiché souhaité est atteint, le compteur-décompteur commande l'arrêt de l'alimentation (28) du godet (1);
- l'alimentation du godet (1) en matériaux, peut s'effectuer par tout moyen connu en soi, et notamment par une vis d'Archimède (28);
- la butée (19) peut coopérer seulement avec les arrêtoirs (21) et (22) et, dans ce cas, la glissière (20) peut être omise. Néanmoins, ces arrêtoirs (21) et (22) ainsi que cette butée (19) peuvent aussi être remplacés par tout autre moyen connu en soi et pouvant être réglable selon le besoin;
- la masse réglable (23) permettant le réglage et le contrôle du couple de basculement, disposée au niveau de la partie dite supérieure do godet (1), peut être déplacée lors du réglage notamment grâce à un pas de vis; cette masse (23) est disposée dans le plan A-B du godet (1);
- la masse (24) réglable assurant l'uniformité du couple de basculement de part et d'autre de la verticale, disposée au niveau de la partie inférieure du godet (1) peut être déplacée lors du réglage grâce notamment à un pas de vis et est placée perpendiculairement au plan A-B du godet (1); ce réglage, affectué au moyen de la masse (24) peut être nécessaire par suite d'un défaut de fabrication, un déséquilibre entre les deux compartiments (2) et (3) pouvant en résulter;
- dans un autre mode d'exécution, la place des masses de réglage (23) et (24) peut être intervertie; ainsi la masse (23) peut être placée au niveau de la partie inférieure du godet (1) et la masse (24) au niveau de la partie supérieure du godet (1);
- de même les positions de ces masses (23) et (24) par rapport à l'axe A-B peuvent être également interverties. En outre, le positionnement desdites masses (23) et (24) et leurs réglages peuvent être effectués à l'aide de tout moyen connu par l'homme de l'art;
- l'axe (6) du godet (1) prend appui, par exemple, sur deux sièges (7) solidaires du bâti (8) qui sont, en outre, dotés notamment de roulements à billes étanches non graissés, autocentreurs;

Dans le cas où l'on souhaite préparer des mélanges de deux matériaux différents ou davantage simultanément, l'alimentation du dispositif de l'invention peut être assurée par un nombre approprié de moyens connus en eux-mêmes, correspondant chacun à un produit déterminé.

Les dessins annexes illustrent l'invention sans toutefois la limiter.

Sur ces dessins, les dimensions et les proportions sont souvent exagérées afin de rendre le dessin plus clair.

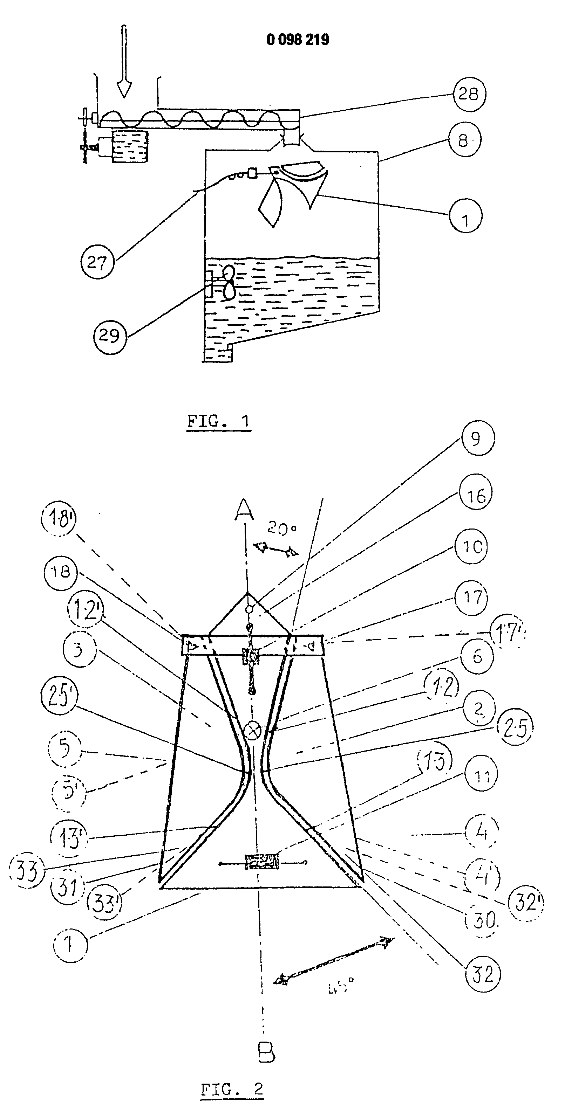

La figure 1 représente une vue schématique de profil du dispositif de l'invention, agencé pour coopérer avec un dispositif d'alimentation (28) en matériau à doser et avec un malaxeur (29) destiné à mélanger les composants.

La figure (2) représente la vue schématique de profil du godet (1) du dispositif de l'invention, le godet étant en position verticale et les deux paires de cloisons (4) et (4') et (5) et (5') étant rabattues contre les fonds correspondants formant ainsi les compartiments (2) et (3) respectivement.

Le moyen (10) permettant le réglage et le contrôle du couple de basculement du godet (1), le moyen (11) assurant que le couple de basculement du godet (1) est identique autour de l'axe (6) ainsi que le moyen (9) susceptible de contrôler l'amplitude des oscillations du godet de part d'autre de la verticale sont représentés sur ce dessin d'une manière schématique.

La figure (3) représente la vue schématique de profil, plus détaillée du dispositif de l'invention en position dite de repos. Le bâti (8) n'y est pas représenté.

Le terme position de repos désigne la position du godet (1) dans laquelle le plan A-B dudit godet (1) forme avec la verticale un angle d'environ 45°. Cet angle est déterminé par les arrêtoirs (21) et (22) solidaires du bâti et la butée (19) solidaire du godet (1) et située dans le plan A-B.

Dans cette position, les cloisons mobiles (5) et (5') du compartiment (3) du godet (1) sont rabattues sur le fond de ce compartiment (3) et en forment les côtés latéraux.

Les cloisons (4) et (4') du compartiment (2) du godet (1) sont par contre détachées par gravité du fond du compartiment (2).

La partie inférieure (13) du fond du compartiment (2) est en position verticale. De ce fait, le matériau ayant été introduit dans ledit compartiment (2), au stade précédent (quand ce compartiment se trouvait en position dite de repos), peut facilement être déchargé dudit compartiment sans que les particules du matériau dosé puissent adhérer aux parois.

La figure 4 représente la vue schématique de face du dispositif de l'invention, placé dans le bâti (8).

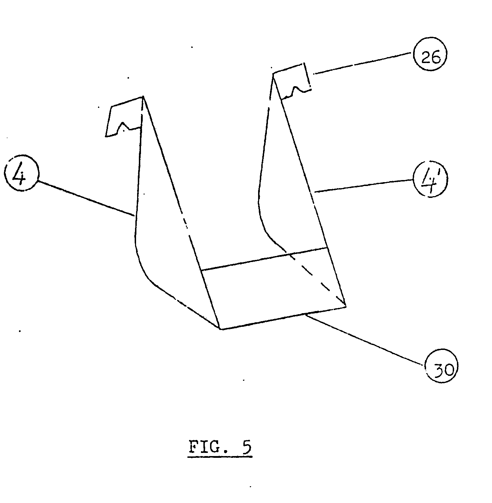

La figure 5 représente la vue schématique d'une paire de cloisons mobiles (4) et (4') rendues solidaires par une partie transversale (30).

Sur ces dessins:

(1) représente le godet mobile,
(2) et (3) les compartiments,
(4) et (4') les cloisons mobiles du récipient (2),
(5) et (5') les cloisons mobiles du récipient (3),
(6) l'axe autour duquel oscille le godet (1),
(7) les sièges du bâti (8) sur lesquels repose l'axe (6),

(9) le moyen susceptible de contrôler l'amplitude des oscillations du godet (1) de part et d'autre de la verticale,

(10) le moyen permettant de régler et de contrôler le couple de basculement du godet (1),

(11) le moyen assurant que le couple de basculement du godet (1) est identique autour de l'axe (6) et, par rapport, au plan A-B,

(12) et (12') les parties supérieures des fonds des compartiments (2) et (3) respectivement,

(13) et (13') les parties inférieures des fonds des compartiments (2) et (3) respectivement,

(14) et (14') les extrêmités dites supérieures des cloisons mobiles (4) et (4') respectivement, cloisons constituant les côtés latéraux du compartiment (2),

(15) et (15') les extrêmités supérieures des cloisons mobiles (5) et (5') respectivement, cloisons constituant les côtés latéraux du compartiment (3),

(16) le sommet du godet (1),

(17) et (17') les points d'attache du sommet (16) du godet (1) où sont fixées les extrêmités (14) et (14') respectivement,

(18) et (18') les points d'attache du sommet (16) du godet (1) où sont fixées les extrêmités (15) et (15') respectivement,

(19) la butée faisant partie du moyen (9) susceptible de contrôler l'amplitude des oscilalations du godet (1), butée placée au sommet (16) du godet (1) et dans le plan A-B, butée qui coopère avec une glissière (20) solidaire du bâti (8), glissière dotée des arrêtoirs (21) et (22),

(23) la masse réglable constituant le moyen (10) permettant de régler et de contrôler le couple de basculement du godet (1), masse disposée au niveau de la partie supérieure du godet (1),

(24) la masse réglable constituant le moyen (11) assurant que le couple de basculement du godet (1) est identique de part et d'autre du plan A-B, masse disposée au niveau de la partie inférieure du godet (1),

(25) et (25') les parties arrondies des fonds des compartiments (2) et (3) respectivement,

(26) et (26') les articulations à couteau au moyen desquelles les cloisons mobiles (4) et (4') et (5) et (5') sont reliées respectivement aux points d'attache (17) et (17') et (18) et (18') du sommet (16) du godet (1),

(27) un contact électrique ou un dispositif détecteur de passage magnétique relié à un compteur-décompteur,

(28) l'alimentation du godet (1),

(29) le mélangeur ou le malaxeur,

(30) et (31) les parties transversales assurant le parallélisme des cloisons (4) et (4') et (5) et (5') respectivement,

(32) et (32') les extrêmités inférieures des cloisons mobiles (4) et (4') respectivement, et

(33) et (33') les extrêmités inférieures des cloisons mobiles (5) et (5') respectivement,

Il est à noter encore que sur les figures pour éviter l'encombrement tous les chiffres ne sont pas toujours indiqués c'est le cas, par exemple, pour les éléments se superposant sur les dessins.

Les traits y indiquant les éléments non visibles, car, recouverts par des éléments visibles sont exécutés en pointillé.

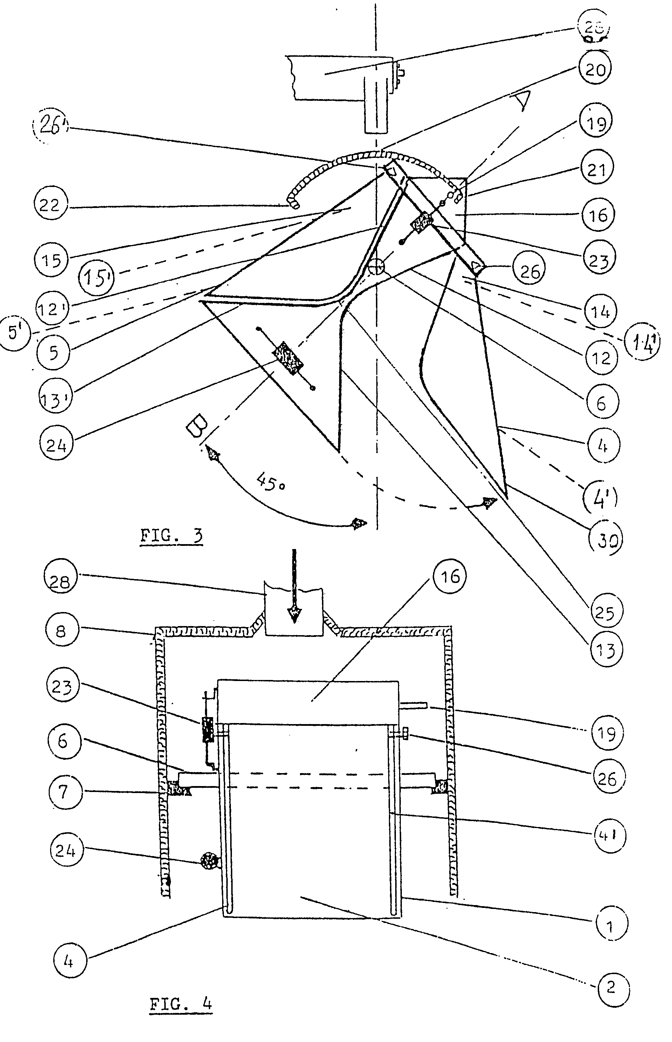

Le fonctionnement du dispositif de la présente invention dans le cas où il s'agit du dosage d'un matériau, en se référant à la figure 3 peut être décrit comme suit:

A l'arrêt, le godet (1) disposé dans le bâti (8) faisant partie d'un ensemble comportant l'alimentation (28) en matériau à doser et le mélangeur ou le malaxeur (29), se trouve en position dite de repos. C'est-à-dire le plan A-B du godet (1) forme avec la verticale un angle d'environ 45°. Dans cette position, les cloisons latérales (5) et (5') du compartiment (3) se trouvant face au dispositif de l'alimentation, sont rabattues contre le fond du compartiment (3) et clôturent ce compartiment (3).

L'alimentation (28) en matériau à doser commence suite à l'ordre donné et le matériau tombe dans le compartiment (3).

Elle se poursuit tant que le poids voulu du matériau n'est pas tombé dans le compartiment (3), une fois ce poids atteint, le godet (1) bascule jusqu'à ce que son plan de symétrie A-B se place dans la verticale.

En arrivant dans cette position du godet (1), les cloisons latérales (5) et (5') du compartiment (3) se détachent du fond de celui-ci et permettent ainsi le déversement du matériau reçu. Ce compartiment se vide alors instantanément et entièrement.

A ce stade, la partie inférieure (13') du compartiment (3) prend une position sensiblement verticale et la partie supérieure (12') dudit fond forme alors avec la verticale un angle d'environ 65°.

La forme du fond des compartiments (2) et (3) facilite donc également le déversement du matériau.

L'évacuation du matériau est encore améliorée du fait que la surface des parois des compartiments est de nature lisse et sans aspérité.

Simultanément, le compartiment (2) vient de se placer en position dite de repos, décrite ci-dessus, pour le compartiment (3) et il est prêt à recevoir le matériau à doser. Il va recevoir la même quantité (Q) du matériau à doser pour basculer ensuite à son tour.

L'alimentation alternative (en alternance) des compartiments (2) et (3) est donc continue. Elle se s'arrête que quand le nombre d'oscillations enregistré au préalable sur le cadran du compteur-décompteur est atteint.

Q est déterminée à l'aide de la masse (23) dont la position est réglable dans le plan A-B.

Q est identique pour les deux compartiments grâce à la masse (24) dont la position est réglable perpendiculairement au plan A-B.

La précision du dispositif est fonction:

— de sa capacité,
— des frottements au niveau des sièges (7).

Pour un même type de sièges, on a donc intérêt à régler le godet (1) au plus près du maximum de sa capacité.

Le dispositif de l'invention peut être favorablement utilisé, comme déjà dit, lors de la préparation des mélanges sous forme de bouillies, de solutions et de suspensions de produits pulvérulents utiles en agriculture.

Le dispositiv de la présente invention peut encore être utilisé pour le dosage des liquides. Lors d'une telle utilisation, les fonds des compartiments (12), (13) et (25) et (12'), (13') et (25') peuvent, afin d'assurer l'étanchéité des compartiments (2) et (3), être dotés desjoints d'étanchéité.

Il en est de même pour les cloisons mobiles (4) et (4') et (5) et (5') qui peuvent être dotées également des joints d'étanchéité seules ou conjointement avec lesdits fonds.

Le dispositif de la présente invention ne saurait pas être limité aux modes d'exécution présentés dont il englobe toutes les variantes.

## Revendications

1. Dispositif doseur — verseur de quantités déterminées de matériaux comportant un bâti (8) et un godet (1),

— le godet (1) étant constitué par deux compartiments (2) et (3) situés de part et d'autre du plan de symétrie A-B du godet (1), adossés ou pouvant faire corps ensemble,
— ledit godet (1) étant mobile et susceptible d'effectuer des basculements dans un mouvement oscillatoire autour d'un axe (6) passant par le plan de symétrie A-B du godet (1), l'axe (6) étant horizontal et angencé de manière à être logé sur les sièges (7) du bâti (8),
— ce godet (1) étant, en outre, doté:
— d'un moyen (9) susceptible de contrôler l'amplitude de ses oscillations de part et d'autre de la verticale,
— d'un moyen (10) permettant de régler et de contrôler son couple de basculement,
— et d'un moyen (11) assurant que le couple de basculement du godet (1) est identique autour de l'axe (6) et de part et d'autre de la verticale,

caractérisé en ce que:

— les compartiments (2) et (3) du godet (1) comportent des côtés latéraux qui sont constitués respectivement par des cloisons mobiles (4) et (4') et (5) et (5');
— le moyen (9) susceptible de contrôler l'amplitude des oscillations du godet (1) est constitué par une butée (19) placée au sommet (16) du godet (1) et dans le plan de symétrie A-B, butée (19) qui coopère d'une part avec une glissière (20) pouvant être solidaire du bâti (8), dotée des arrêtoirs (21) et (22) délimitant la course de la butée (19),
— le moyen (10) permettant de régler et de contrôler le couple de basculement du godet (1) est constitué par une masse (23) réglable, disposée au niveau de la partie supérieure du godet (1),
— le moyen (11) assurant que le couple de basculement du godet (1) est identique autour de l'axe (6) et de part et d'autre de la verticale, est constitué par une masse (24) réglable, disposée au niveau de la partie inférieure du godet (1).

2. Dispositif suivant la revendication 1, caractérisé en ce que le plan de symétrie A-B du godet (1), quand celui-ci est en position dite de repos (prêt pour l'utilisation), fait avec la verticale un angle d'environ 45°.

3. Dispositif suivant l'une quelconque des revendications 1 et 2, caractérisé en ce que:
les fonds des compartiments (2) et (3) forment dans leurs parties dites supérieures (12) et (12'), un angle d'environ 20°, avec le plan de symétrie A-B, et dans leurs parties dites inférieures (13) et (13'), un angle d'environ 45°.

4. Dispositif suivant l'une quelconque des revendications 1 à 3, caractérisé en ce que:
les extrêmités dites inférieures (32) et (32') et (33) et (33') des cloisons mobiles (4) et (4') d'une par (5) et (5') d'autre part, constituant les côtés latéraux des compartiments (2) et (3) respectivement, sont rendues solidaires entre elles par paire, par des parties transversales (30) et (31) respectivement.

5. Dispositif suivant l'une quelconque des revendications 1 à 4, caractérisé en ce que:
— les extrêmités dites supérieures (14) et (14') et (15) et (15') des cloisons mobiles (4) et (4') d'une part et (5) et (5') d'autre part, constituant les côtés latéraux des compartiments (2) et (3) respectivement, sont attachées symétriquement et d'une manière permettant leur mobilité autour des points d'attache (17) et (17') et (18) et (18') respectivement.

6. Dispositif suivant l'une quelconque des revendications 1 à 5, caractérisé en ce que:
— le moyen (9) susceptible de contrôler l'amplitude des oscillations du godet (1) peut effectuer simultanément, l'enregistrement du nombre des basculements oscillatoires et le contrôle de l'alimentation du godet (1) en matériau à doser, du fait qu'il coopère respectivement avec un dispositif compteur des basculements oscillatoires et avec au moins un dispositif commandant l'alimentation du godet (1) en matériau à doser.

7. Appareil utilisé pour doser et préparer les mélanges de matériaux, caractérisé en ce qu'il comporte incorporé, le dispositif suivant l'une quelconque des revendications 1 à 6.

8. Procédé de dosage et de versement de quantités déterminées de matériaux au moyen du dispositif défini è la revendication 7.

## Patentansprüche

1. Vorrichtung zum Dosieren und Spenden von gegebenen Materialmengen mit einem Untergestell (8) und einem Becher (1),

— wobei der Becher (1) aus zwei beiderseits der Symmetrieebene (A-B) des Bechers (1) angeordneten Abteilen (2) und (3) besteht, die aneinanderliegen oder einstückig sein können,
— wobei der Becher (1) beweglich ist und in einer Schwingbewegung um eine durch die Symmetrieachse (A-B) des Bechers (1) gehende Achse (6) kippen kann, die waagrecht ist und auf den Sitzen (7) des Untergestelles (8) gelagert ist,
— wobei der Becher (1) außerdem versehen ist:
— mit einer Einrichtung (9) zur Kontrolle der Amplitude seiner Schwingungen beiderseits der Senkrechten,
— mit einer Einrichtung zur Einstellung und Kontrolle seines Kippmoments,
— und mit einer Einrichtung (11), die sicherstellt, daß das Kippmoment des Bechers (1) um die Achse (6) und beiderseits der Senkrechten identisch ist,

dadurch gekennzeichnet,

— daß die Abteile (2) und (3) des Bechers (1) Seitenflächen aufweisen, die jeweils durch bewegliche Zwischenwände (4) und (4') sowie (5) und (5') gebildet sind,
— daß die Einrichtung (9) zur Kontrolle der Amplitude der Schwingungen des Bechers (1) aus einem Widerlager (19) besteht, das am oberen Ende (16) des Bechers (1) und in der Symmetrieebene (A-B) angeordnet ist und das einerseits mit einer Gleitführung (20) zusammenarbeitet, die mit dem Untergestell (8) fest verbunden sein kann und mit Anschlägen (21) und (22) versehen ist, die den Weg des Widerlagers (19) begrenzen,
— daß die Einrichtung (10) zur Einstellung und Kontrolle des Kippmoments des Bechers (1) aus einer einstellbaren Masse (23) besteht, die in Höhe des Oberteils des Bechers (1) angeordnet ist,
— daß die Einrichtung (11), die sicherstellt, daß das Kippmoment des Bechers (1) um die Achse (6) und beiderseits der Senkrechten identisch ist, aus einer einstellbaren Masse (24) besteht, die in Höhe des Unterteils des Bechers (1) angeordnet ist.

2. Vorrichtung nach Anspruch 1, dadurch gekennzeichnet, daß die Symmetrieebene (A-B) des Bechers (1), wenn sich dieser in der Ruhestellung (verwendungsbereit) befindet, mit der Senkrechten einen Winkel von etwa 45° einschließt.

3. Vorrichtung nach einem der Ansprüche 1 und 2, dadurch gekennzeichnet, daß die Böden der Abteile (2) und (3) in ihren Oberteilen (12) und (12') mit der Symmetrieebene (A-B) einen Winkel von etwa 20° und in ihren Unterteilen (13) und (13') einen Winkel von etwa 45° einschließen.

4. Vorrichtung nach einem der Ansprüche 1 bis 3, dadurch gezeichnet, daß die unteren Enden (32) und (32') sowie (33) und (33') der beweglichen Zwischenwände (4) und (4') einerseits sowie (5) und (5') andererseits, die die Seitenflächen der Abteile (2) bzw. (3) bilden, durch Querteile (30) bzw. (31) paarweise miteinander verbunden sind.

5. Vorrichtung nach einem der Ansprüche 1 bis 4, dadurch gekennzeichnet, daß die oberen Enden (14) und (14') sowie (15) und (15') der beweglichen Zwischenwände (4) und (4') einerseits sowie (5) und (5') andererseits, die die Seitenflächen der Abteile (2) bzw. (3) bilden, symmetrisch und in einer Art befestigt sind, die ihre Beweglichkeit um Befestigungspunkte (17) und (17') bzw. (18) und (18') gewährleistet.

6. Vorrichtung nach einem der Ansprüche 1 bis 5, dadurch gekennzeichnet, daß die Einrichtung (9) zur Kontrolle der Amplitude der Schwingungen des Bechers (1) gleichzeitig die Aufzeichnung der Anzahl der Kippschwingungen und die Kontrolle der Speisung des Bechers (1) mit zu dosierendem Material ausführen kann, weil sie mit einer Zählvorrichtung für die Kippschwingungen und mit wenigstens einer Vorrichtung zusammenarbeitet, die die Speisung des Bechers (1) mit zu dosierendem Material steuert.

7. Zur Dosierung und Bereitung von Materialgemischen verwendetes Gerät, dadurch gekennzeichnet, daß in ihm die Vorrichtung nach einem der Ansprüche 1 bis 6 eingebaut ist.

8. Verfahren zum Dosieren und Spenden von gegebenen Materialmengen mittels der im Anspruch 7 definierten Vorrichtung.

## Claims

1. Device for measuring and pouring out determined quantities of materials comprising a frame (8) and a container (1),

— the container (1) being formed by two compartments (2) and (3) situated on either side of the plane of symmetry A-B of the container (1), back to back or able to be made integrally,
— the said container (1) being movable and able to rock in an oscillatory movement about an axis (6) passing through the plane of symmetry A-B of the container (1), the axis (6) being horizontal and arranged so as to be supported on the seatings (7) of the frame (8),
— this container (1) being, in addition, provided with:
— a means (9) able to control the amplitude of its oscillations on either side of the vertical,

— a means (10) enabling its rocking couple to be regulated and controlled,

— and a means (11) ensuring that the rocking couple of the container (1) is identical about the axis (6) and on either side of the vertical,

characterized in that:

— the compartments (2) and (3) of the container (1) enclude side pieces which are constituted respectively by movable shutters (4) and (4') and (5) and (5'):

— the means (9) able to control the amplitude of the oscillations of the receptacle (1) is formed by a stop (19) placed at the top (16) of the container (1) and in the plane of symmetry A-B, which stop (19) co-operates on the one hand with a slider (20) which may be fixed to the frame (8), provided with catches (21) and (22) limiting the travel of the stop (19);

— the means (10) enabling the rocking couple of the container (1) to be regulated and controlled is constituted by an adjustable weight (23) arranged at the level of the upper part of the container (1),

— the means (11) ensuring that the rocking couple of the container (1) is identical about the axis (6) and on both sides of the vertical is constituted by an adjustable weight (24) arranged at the level of the lower part of the container (1).

2. Device according to Claim 1, characterized in that the plane of symmetry A-B of the container (1), when the latter is said to be in the rest position (ready for use), makes an angle of about 45° with the vertical.

3. Device according to either one of the Claims 1 and 2, characterized in that:
the bottoms of the compartments (2) and (3) in their said upper parts (12) and (12') form an angle of about 20° with the plane of symmetry A-B, and in their said lower parts (13) and (13') an angle of about 45°.

4. Device according to any one of the Claims 1 to 3, characterized in that:
the said lower extremities (32) and (32') and (33) and (33') of the movable shutters (4) and (4') on the one hand and (5) and (5') on the other hand, forming respectively the side pieces of of the compartments (2) and (3) are fixed together in pairs by the transversal parts (30) and (31) respectively.

5. Device according to any one of the Claims 1 to 4, characterized in that:
— the said upper extremities (14) and (14') and (15) and (15') of the movable shutters (4) and (4') on the one hand and (5) and (5') on the other hand, respectively form the side pieces of the compartments (2) and (3), are attached symmetrically and in such a way as to enable their movement about the points of attachement (17) and (17') and (18) and (18') respectively.

6. Device according to any one of the Claims 1 to 5, characterized in that:
— the means (9) able to control the amplitude of the oscillations of the container (1) can simultaneously record the number of oscillatory movements and control the supply of the material to be measured to the container (1), because it co-operates respectively with a counting device for the oscillatory rockings and with at least one device controlling the supply of the material to be measured to the container (1).

7. Apparatus used to measure and prepare mixtures of materials, characterized in that it includes incorporated in it the device according to any one of the Claims 1 to 6.

8. Process of measuring and pouring out determined quantities of materials by means of the device defined in Claim 7.

0 098 219

FIG. 1

FIG. 2

9

FIG. 3

FIG. 4

FIG. 5